# EUROPEAN PATENT SPECIFICATION

(11) **EP 4 517 679 B1**
(45) Date of publication and mention of the grant of the patent: **21.10.2026**
(21) Application number: 23210044.6
(22) Date of filing: 15.11.2023
(51) Int. Cl.: G06V 10/10, G06V 10/22, G06V 10/25, G06V 10/75, G06V 10/82

(54) **BARCODE IMAGE RECOGNITION METHOD AND DEVICE USING THE SAME**
STRICHCODEBILDERKENNUNGSVERFAHREN UND VORRICHTUNG DAMIT
PROCÉDÉ DE RECONNAISSANCE D'IMAGE DE CODE À BARRES ET DISPOSITIF L'UTILISANT

(30) Priority: 01.09.2023 CN 202311123571
(43) Date of publication of application: 05.03.2025
(73) Proprietor: Getac Technology Corporation, New Taipei City (TW)
(72) Inventor: LEE, Jiunn-Jye, 11568 Taipei City (TW)
(74) Representative: Viering, Jentschura & Partner mbB Patent- und Rechtsanwälte

(56) References cited:
- US-B1- 11 328 147
- LING CHEN: "On Scanning Linear Barcodes From Out-of-Focus Blurred Images: A Spatial Domain Dynamic Template Matching Approach", vol. 23, no. 6, 1 June 2014 (2014-06-01), USA, pages 2637 - 2650, XP093155955, ISSN: 1057-7149, Retrieved from the Internet <URL:https://ieeexplore.ieee.org/stampPDF/getPDF.jsp?tp=&arnumber=6804660&ref=aHR0cHM6Ly93d3cuZ29vZ2xlLmNvbS8=> [retrieved on 20240425], DOI: 10.1109/TIP.2014.2319579

## Description

### BACKGROUND OF THE INVENTION

The present disclosure relates to a barcode recognition technology, and in particular relates to a method and device for recognizing barcode images.

Barcodes may carry multi-character information, such as related information about product names, specifications, origins, prices, batch numbers and the like. Therefore, the barcodes are often applied to mark commodities, track logistics, manage inventory, control production flows and the like. In these logistics and management and control, accurate and controlled recognition of barcodes or texts can improve the operating efficiency of a related worker and reduce manual operations and errors.
Ling Chen: "On Scanning Linear Barcodes From Out-of-Focus Blurred Images: A Spatial Domain Dynamic Template Matching Approach", IEEE Transactions on Image Processing, vol. 23, no. 6, 1 June 2014 (2014-06-01), pages 2637-2650, XP093155955, USA; ISSN: 1057-7149, DOI: 10.1109/TIP.2014.2319579 discloses a barcode image recognition method, comprising: enabling a camera module; continuously capturing, by the camera module, at least one target object after the camera module is enabled to obtain a plurality of default images with continuous capturing time; identifying a first target image of each target object in each default image; capturing each first target image from each default image; converting each first target image into a string by applying dynamic template matching; storing each first target image and the string corresponding to each first target image; and outputting the string.
A further barcode recognition method is known from US 11 328 147 B1.

### SUMMARY OF THE INVENTION

In view of this, the present disclosure provides a barcode image recognition method and a device using the same, which are suitable for accurately and controllably outputting a string of indicated barcodes or text when there is a plurality of barcodes or texts.

The present invention provides a barcode image recognition method according to independent claim 1. The barcode image recognition method includes: enabling a camera module; continuously capturing at least one target object in advance by the camera module after the camera module is enabled to obtain a plurality of default images with continuous capturing time; identifying, by a first artificial neural network, a first target image of each target object in each default image, wherein each target object is a barcode or a string, or has a barcode and a string; capturing each first target image from each default image, wherein each default image includes a barcode image of the barcode and/or a string image of the string, wherein the barcode image and/or the string image are obtained by the first artificial neural network identifying the default image; converting each first target image to a string; storing each first target image and the string corresponding to each first target image; triggering the camera module according to a confirmation signal to take a single capture of a predetermined mark to obtain a captured image; identifying, by a second artificial neural network, a marked image of the predetermined mark in the captured image and a second target image of a selected target object of the at least one target object that overlaps with the predetermined mark; comparing the second target image with each first target image to obtain a final selected image, the final selected image being the first target image with the highest similarity to the second target image; and reading a string corresponding to the final selected image from the stored strings and outputting the same; wherein in detail, after the first artificial neural network identifies the first target image in each default image, the first artificial neural network further identifies each first target image as the barcode image and/or the string image; wherein: if the first artificial neural network identifies the first target image as the barcode image, decoding, by a decoder, the barcode image into the string; and if the first artificial neural network identifies the first target image as the string image, performing, by an identifier, text identification on the string image to obtain the string.

Further preferred embodiment of the barcode image recognition method are shown in claims 2 to 6.

-

**In** an example, further comprising: receiving the confirmation signal from an input component, wherein the input component is a key, the key is located on an indicating device and the indicating device is independent of the camera module; and generating, by the indicating device, the predetermined mark on one of the at least one target object.

**In** an example, further comprising: receiving the confirmation signal from an input component, wherein the input component is a key, the key and the camera module are located on a portable electronic device; and generating, by the portable electronic device, the predetermined mark on one of the at least one target object, wherein the predetermined mark is a cursor.

In an example, further comprising: identifying the marked image of the predetermined mark in each default image to obtain a marked position of the marked image in each default image; and generating the confirmation signal according to the capturing time of the default images with the marked image in these default images and the marked position.

In an example, further comprising: pointing to, by an indicating device, the selected target object in the at least one target object to form the predetermined mark overlapping with the selected target object.

In an example, further comprising: providing that the predetermined mark overlaps with the selected target object in the at least one target object.

The present disclosure further provides a barcode image recognition device according to independent claim 7. The barcode image recognition device includes a camera module, an input component, a processing module, a storage module, an output module, and a display. The camera module is configured to continuously capture at least one target object in advance to obtain a plurality of default images with continuous capturing time. The input component is coupled to the camera module, and is configured to generate a confirmation signal to trigger the camera module to take a single capture of a predetermined mark to obtain a captured image where the predetermined mark overlaps with the at least one target object. The processing module is coupled to the camera module, and includes a first artificial neural network, a conversion module, a second artificial neural network, and a comparison module. The first artificial neural network identifies a first target image of each target object in each default image, wherein each target object is a barcode or a string, or has a barcode and a string, and wherein each default image includes a barcode image of the barcode and/or a string image of the string, wherein the barcode image and/or the string image are obtained by the first artificial neural network in the processing module identifying the default image. The conversion module converts each first target image to a string. The second artificial neural network identifies a marked image of the predetermined mark in the captured image and a second target image of a selected target object of the at least one target object that overlaps with the predetermined mark. The comparison module is coupled to the first artificial neural network and the second artificial neural network, and compares the second target image with each first target image to obtain a final selected image, the final selected image being the first target image with the highest similarity to the second target image. The storage module is coupled to the processing module, and stores each first target image and the string corresponding to each first target image. The output module is coupled to the comparison module and the storage module, and reads the string corresponding to the final selected image from the storage module. The display is coupled to the output module, and displays the string read by the output module. The conversion module includes both a decoder and an identifier and the first artificial neural network is configured to identify a type of the first target image, wherein, in detail, after the first artificial neural network identifies the first target image in the default image, the first artificial neural network is configured to further identify each first target image as the barcode image and/or the string image; wherein: if the first artificial neural network identifies the first target image as the barcode image, the decoder in the conversion module is configured to decode the barcode image into the string, and if the first artificial neural network identifies the first target image as the string image, the identifier in the conversion module is configured to perform text identification on the string image to obtain the string.

Further preferred embodiment of the barcode image recognition device are shown in claims 8 to 11.

-

In an example, further comprising an indicating device, the input component is a key, the key being located on the indicating device, and the indicating device being independent of the camera module, the indicating device generating the predetermined mark on one of the at least one target object.

In an example, wherein the input component is a key, the key and the camera module are located on a portable electronic device, wherein the portable electronic device generates the predetermined mark on one of the at least one target object.

In an example, wherein the predetermined mark is a finger, a cursor generated by an infrared pen, or a cursor generated by a laser pen.

In an example, wherein the processing module further comprises a mark confirmation module, configured to identify the marked image of the predetermined mark in each default image to obtain a marked position of the marked image in each default image, and generate the confirmation signal according to the capturing time of the plurality of default images with the marked image in these default images and the marked position.

### BRIEF DESCRIPTION OF DRAWINGS

FIG. 1A is a functional block diagram of a barcode image recognition device according to some examples.
FIG. 1B is a schematic diagram of an application scenario of a barcode image recognition device according to the example of FIG. 1A.
FIG. 2 is a flowchart of a barcode image recognition method according to some examples.
FIG. 3 is a schematic diagram of a default image in step S110 of FIG. 2.
FIG. 4 is a functional block diagram of an example of a conversion module according to the example of FIG. 1A.
FIG. 5 is a flowchart of a barcode image recognition method according to some examples after step S120 in FIG. 2.
FIG. 6A is a schematic diagram of an application scenario of a barcode image recognition device according to another example.
FIG. 6B is a functional block diagram of a barcode image recognition device in FIG. 6A.
FIG. 7 is a schematic diagram of an example of a barcode image recognition device in FIG. 6B.
FIG. 8 is a schematic diagram of another example of a barcode image recognition device of FIG. 6B.
FIG. 9 is a flowchart of a barcode image recognition method according to some examples before step S150 in FIG. 2.
FIG. 10 is a schematic diagram of an example of a barcode image recognition device in FIG. 6B.

### DETAILED DESCRIPTION OF THE INVENTION

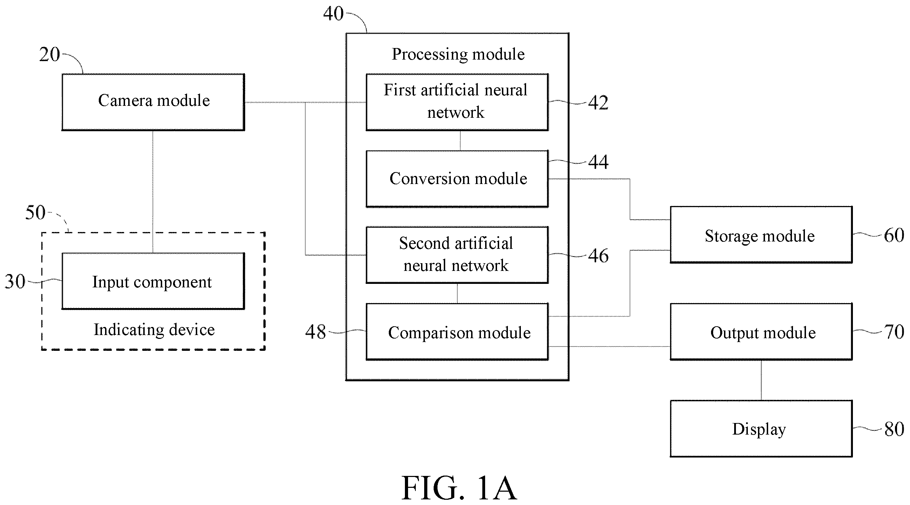

Referring to FIG. 1A, a barcode image recognition device includes a camera module 20, an input component 30, a processing module 40, a storage module 60, an output module 70, and a display 80. The input component 30 and the processing module 40 are each coupled to the camera module 20. The storage module 60 is coupled to the processing module 40. The output module 70 is coupled to both the processing module 40 and the storage module 60. The display 80 is coupled to the output module 70.

The processing module 40 includes a first artificial neural network 42, a conversion module 44, a second artificial neural network 46, and a comparison module 48. The first artificial neural network 42 receives images captured by the camera module 20. The conversion module 44 is coupled to the first artificial neural network 42 and processes the images captured by the camera module 20. The second artificial neural network 46 also receives the images captured by the camera module 20, and the comparison module 48 is coupled to the first artificial neural network 42 and the second artificial neural network 46 and also processes the aforementioned images.

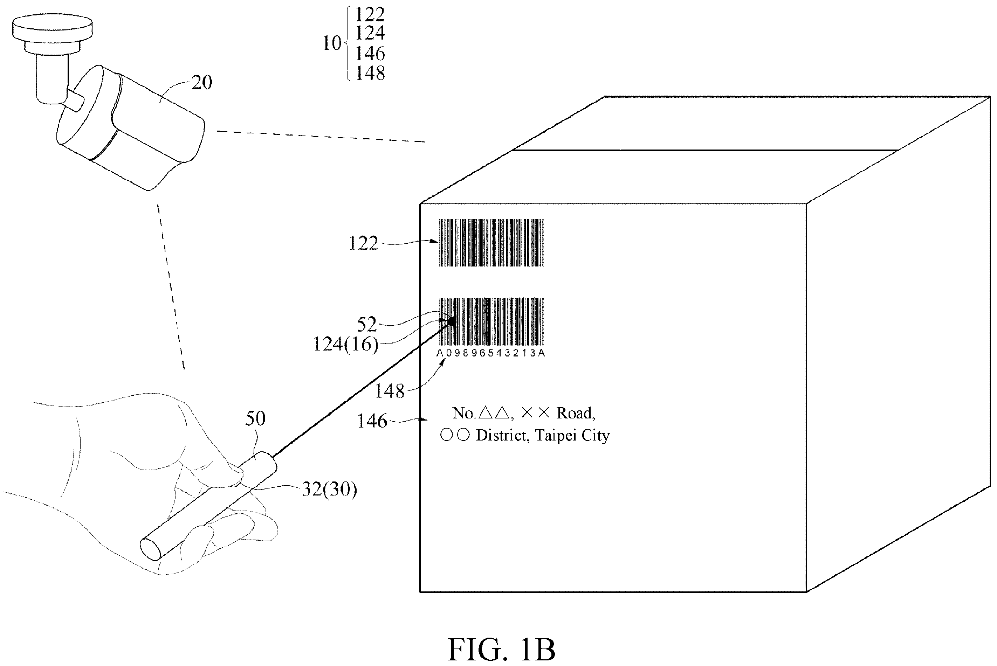

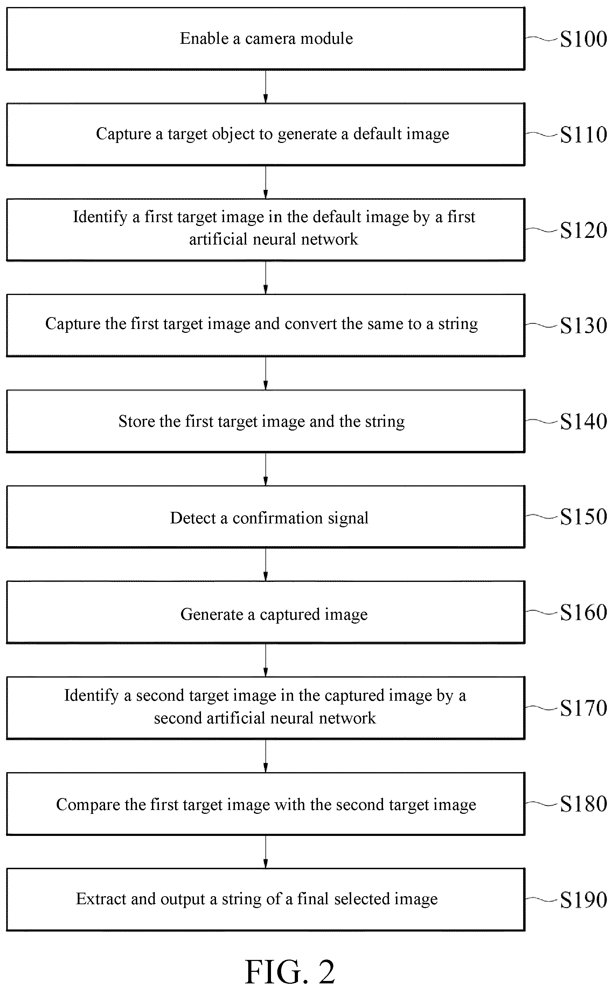

Referring to FIG. 1B and FIG. 2, when the barcode image recognition device is used, the camera module 20 (step S100) is enabled, and the camera module 20 will continuously capture target objects 10 in advance to obtain a plurality of default images 22 with continuous capturing time (step S110). In some examples, the target objects 10 are barcodes 122 and 124 or strings 146 and 148.

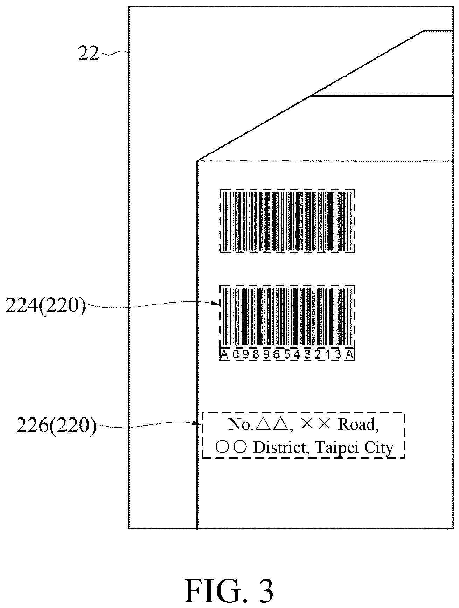

Referring to FIG. 1B, FIG. 2 and FIG. 3 together, the default image 22 may be similar to a picture a user previews and captures in real time through a screen when capturing with an electronic device. The default image 22 has a first target image 220 of each target object 10. Taking the target object 10 having the barcode 124 and the string 146 as an example, the default image 22 will include a barcode image 224 of the barcode 122 and a string image 226 of the string 146. The barcode image 224 and the string image 226 are obtained by the first artificial neural network 42 in the processing module 40 identifying the default image 22 (step S120).

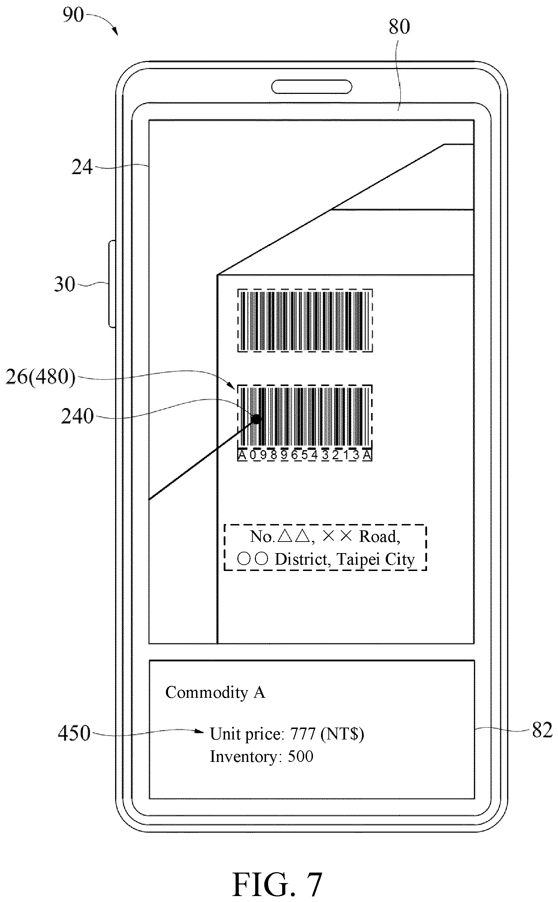

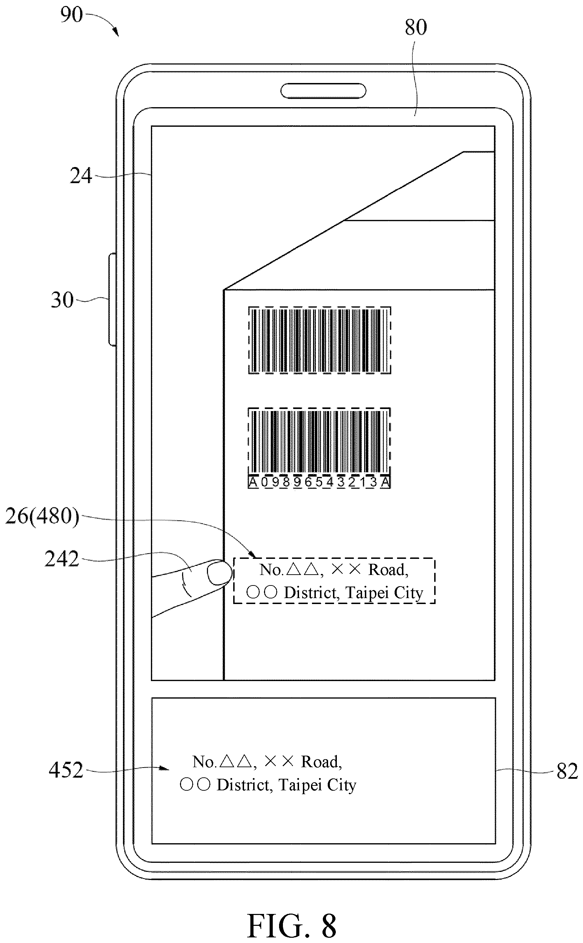

The processing module 40, after capturing these identified first target images 220, converts each first target image 220 to strings 450 and 452 (see FIG. 7 or FIG. 8) with the conversion module 44 (step S130).

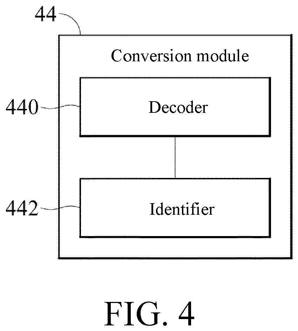

Referring to FIG. 4, the conversion module 44 includes a decoder 440. When the first target image 220 is converted to the string 450, the decoder 440 decodes the barcodes 122 and 124 to obtain information carried by the barcodes 122 and 124, where the information may be a text or a website address.

The conversion module 44 includes an identifier 442. When the first target image 220 is converted to the string 452, the identifier 442 performs text identification on the strings 146 and 148 and identifies the string image 226 as the string 452.

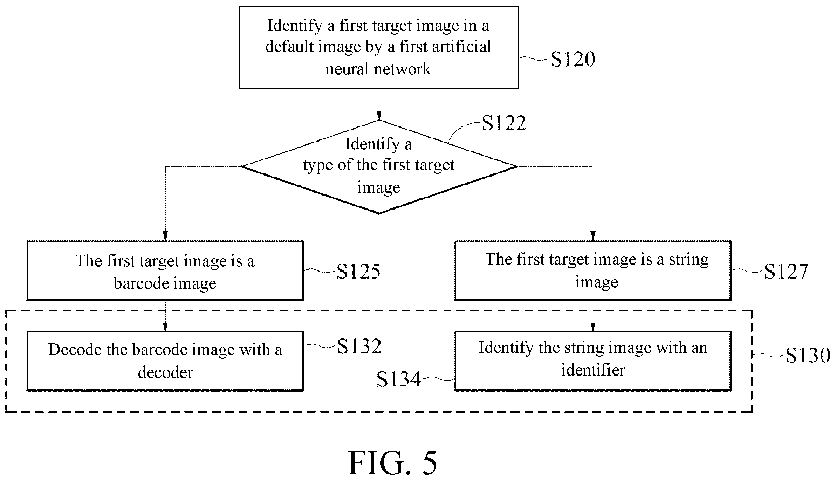

Referring to FIG. 4 and FIG. 5 the conversion module 44 includes both the decoder 440 and the identifier 442 and the first artificial neural network 42 can identify a type of the first target image 220 (the type is the above-mentioned barcode image 224 or string image 226).

In detail, after the first artificial neural network 42 identifies the first target image 220 in the default image 22 (step S120), the first artificial neural network 42 further identifies each first target image 220 as the barcode image 224 or string image 226 (step S122). If the first artificial neural network 42 identifies the first target image 220 as the barcode image 224 (step S125), the decoder 440 in the conversion module 44 decodes the barcode image 224 into the string 450 (step S132). If the first artificial neural network 42 identifies the first target image 220 as the string image 226 (step S127), the identifier 442 in the conversion module 44 performs text identification on the string image 226 to obtain the string 452 (step S134).

Referring back to FIG. 2, the storage module 60 stores each of the above-mentioned first target images 220 and the strings 450 and 452 corresponding to the first target images 220 converted by the conversion module 44 (step S140). In some examples, a database of barcodes 122 and 124 and strings 146 and 148 can be formed after the first target images 220 and the corresponding strings 450 and 452 in the plurality of default images 22 are stored, so that the strings 450 and 452 corresponding to the barcodes 122 and 124 and the strings 146 and 148 are extracted at any time when needed later.

Referring back to FIG. 1B, when the user desires to obtain information about a particular target object 10, the particular target object 10 may be directly indicated by an indicating device 50 or a finger, and then a predetermined mark 52 overlapping the target object 10 may be generated on the target object 10, and the indicated target object 10 is taken as a selected target object 16. In some examples, the indicating device 50 is an infrared pen or a laser pen, and the generated predetermined mark 52 is a cursor. In some examples, the indicating device 50 can be implemented with the finger, and the predetermined mark 52 is a part where the finger points to the target object 10.

Referring to FIG. 1B, FIG. 2, FIG. 7 and FIG. 8, after the user indicates the target object 10 with the indicating device 50 or finger, the camera module 20 takes a photo of the selected target object 16 according to a confirmation signal (step S150) to obtain a captured image 24 (step S160). Here, the second artificial neural network 46 identifies the captured image 24 to obtain a second target image 26 of the selected target object 16 (step S170). The second target image 26 is the first target image 220 overlapping with marked images 240 and 242 of the predetermined mark 52. Subsequently, the comparison module 48 compares the second target image 26 and each previously stored first target image 220 (step S180), and the first target image 220 with the highest similarity to the second target image 26 is used as a final selected image 480. The output module 70 extracts the strings 450 and 452 corresponding to the final selected images 480 (i.e., the first target image 220 as the final selected image 480) from the storage module 60, and the strings 450 and 452 are displayed by the display 80 (step S190).

In this way, the user can quickly and easily select the strings 450 and 452 corresponding to the barcodes 122 and 124 or the strings 146 and 148 the user desires to output from the plurality of barcodes 122 and 124 or the strings 146 and 148, and after selection, quickly outputs the strings 450 and 452 corresponding to the selected barcodes 122 and 124 or the strings 146 and 148 from strings 450 and 452 obtained by decoding or identifying a plurality of barcodes 122 and 124 or the string 148.

Taking the indicating device 50 as the infrared pen or the laser pen as an example, after the user presses a switch of the infrared pen or laser pen, the infrared pen or the laser pen generates a cursor, and the marked image 240 of the cursor (i.e., the predetermined mark 52) also begins to appear in the default image 22 captured by the camera module 20 that performs capturing continuously. Taking the finger as the indicating device 50 as an example, when the finger of the user enters the capturing range of the camera module 20, the marked image 240 of the finger also begins to appear in the default image 22 captured by the camera module 20.

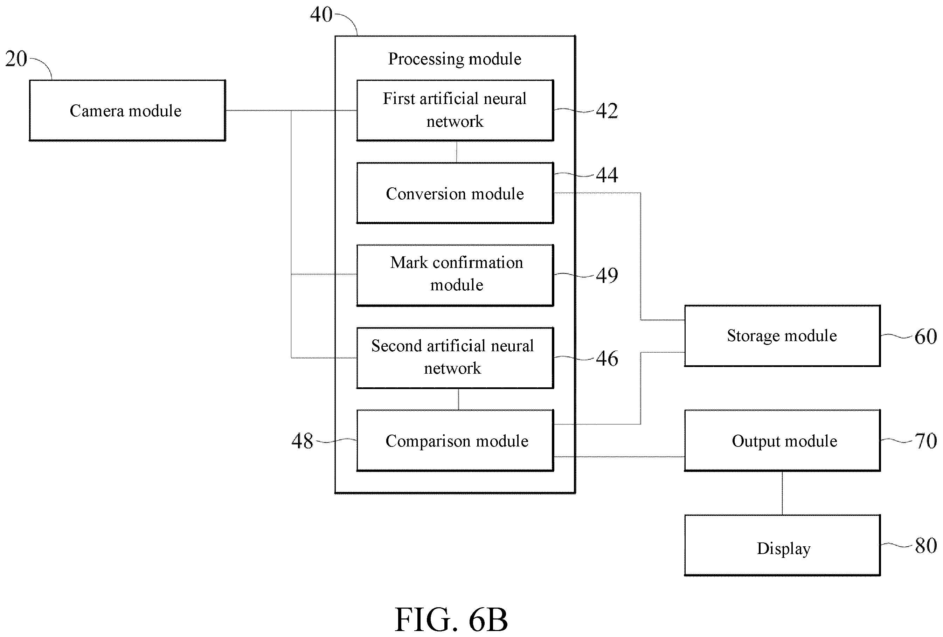

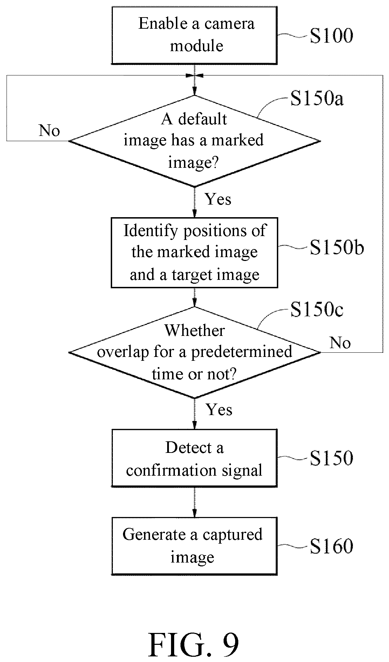

Referring to FIG. 6B and FIG. 9, in some examples, the processing module 40 includes a mark confirmation module 49. The mark confirmation module 49 is coupled to the camera module 20. The mark confirmation module 49 identifies the default image 22 repeatedly captured by the camera module 20 to confirm whether there are the marked images 240 and 242 in the default image 22 (step S150a), and after confirming that there are the marked images 240 and 242 in the default image 22, the position of the marked image 240 in the default image 22 is identified (step S150b), thereby knowing whether the marked image 240 overlaps with the first target image 220 or not. When the marked image 240 overlaps with the first target image 220 and the overlapping time reaches a predetermined time (step S150c), the processing module 40 generates a confirmation signal and sends the same back to the camera module 20. After the camera module 20 detects the confirmation signal (step S150), a single capture is taken again to obtain the captured image 24 with the second target image 26 (step S160).

The intention of generating the confirmation signal after the marked image 240 and 242 overlaps with one of the first target images 220 for the predetermined time is that the predetermined mark 52 cannot accurately point to the particular target object 10 from the beginning. Taking the indicating device 50 as an infrared pen or a laser pen as an example, the user often cannot directly place the cursor on the particular target object 10 at the moment of pressing the switch, but needs to move the position of the cursor from the moment of pressing the switch onto the particular target object 10 (i.e., the selected target object 16). In an example where the finger is used as the indicating device 50, there is also a similar situation where the finger cannot point to the particular target object 10 at the moment it appears in the default image 22.

During the movement of the cursor or finger, it may pass by other target objects 10 other than the selected target object 16, and the overlapping time between the finger and the other target objects 10 during the movement will be shorter. Therefore, it can be judged whether the cursor or finger is indeed resting on the selected target object 16 at present or not by "whether overlapping lasts for a predetermined time or not" (step S150c).

In some examples, if the mark confirmation module 49 identifies that there are no marked images 240 and 242 in the default image 22 or that there are the marked images 240 and 242 in the default image 22, but the overlapping time between the marked images 240 and 242 and the first target image 220 does not exceed the predetermined time, it indicates that the predetermined mark 52 (finger or cursor) has not yet accurately indicated the selected target object 16, and there is no need to make the camera module 20 perform a single capture with the confirmation signal to obtain the captured image 24. At this time, the mark confirmation module 49 can repeatedly judge the default image 22, and generate the confirmation signal when the default image 22 has the marked images 240 and 242, and the marked images 240 and 242 overlap with the first target image 220 and overlap for a predetermined time.

Referring back to FIG. 1B, in some examples, the user generates the confirmation signal through the input component 30, and the input component 30 is a key 32. The key 32 can be implemented directly by the switch of the infrared pen or the laser pen. After the key 32 is pressed, the infrared pen or the laser pen generates a cursor, and the camera module 20 also starts capturing. When the mark confirmation module 49 identifies that the default image 22 captured by the camera module 20 has the marked image 240, and the marked image 240 overlaps with the first target image 220 and overlaps for a predetermined time, a confirmation signal is generated. The camera module 20 generates the captured image 24 with the second target image 26 after detecting the confirmation signal.

In some examples, the input component 30 implemented with the key 32 is the key 32 independent of the switch of the infrared pen or the laser pen, then when the finger does overlap with the selected target object 16, the user can press the key 32. The camera module 20 takes the single capture according to the confirmation signal generated when the user presses the key 32 to obtain the captured image 24 with the second target image 26.

Referring to FIG. 2 or FIG. 7 and FIG. 8, in some examples, after confirmation of the final selected image 480, the output module 70 extracts the strings 450 and 452 stored after decoding by the decoder 440 or text identification by the identifier 442, and the strings 450 and 452 are outputted and displayed on the display 80. Display fields 82 of the strings 450 and 452 can be set on the display 80, and the strings 450 and 452 are displayed in the display fields 82 to facilitate the user to visually obtain information represented by the target object 10.

In some examples, the design of the fields in the display 80 can be adjusted according to the user's needs. For example, on the display 80, the default image 22 and the display field 82, the captured image 24 and the display field 82 (as shown in FIG. 7 and FIG. 8), or the second target image 26, the final selected image 480 and the display field 82 can be displayed side by side in the picture of the display 80. In some examples, the display field 82 can be presented in a window. The window pops up after the processing module 40 judges the final selected image 480, and displays the strings 450 and 452 corresponding to the final selected image 480.

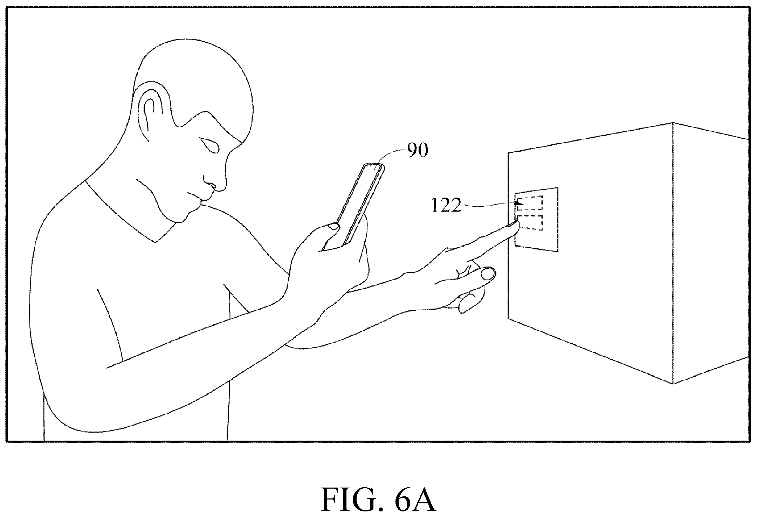

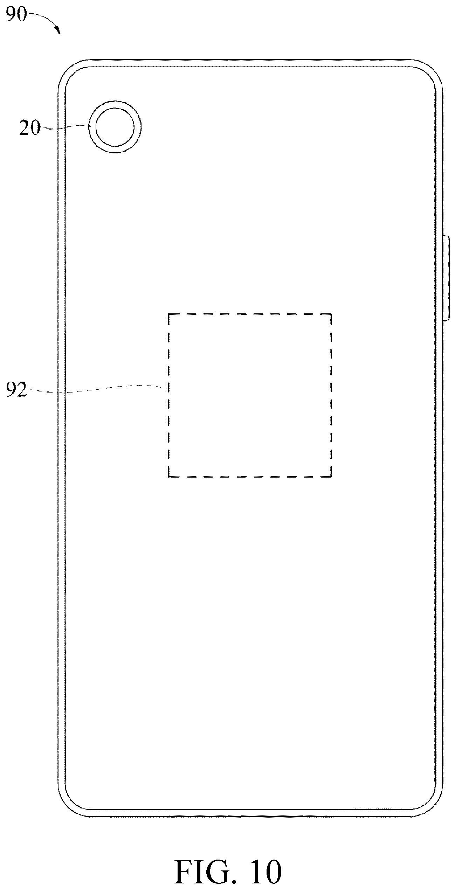

Referring to FIG. 6A, FIG. 7 and FIG. 8, and FIG. 10, in some other examples, when the input component 30 is implemented with the key 32, the key 32 and the camera module 20 are located together on a portable electronic device 90. In some examples, the key 32 may be any button on the portable electronic device 90 or a button on a user interface of the portable electronic device 90. The camera module 20 may be a front lens or rear lens mounted on the portable electronic device 90.

In some examples, the camera module 20, the processing module 40, the storage module 60, the output module 70, and the display 80 can also be implemented with components of the portable electronic device 90 itself. For example, the processing module 40 and the output module 70 may be implemented with the processor 92 of the portable electronic device 90 itself. An internal memory in the processor 92 or an external memory of the portable electronic device 90 may be used as the storage module 60. The display 80 is implemented with a display screen of the portable electronic device 90. The indicating device 50 can also be provided on the portable electronic device 90.

In some other examples, the camera module 20, the processing module 40, the storage module 60, the output module 70, and the display 80 can also be independent of each other. For example, the camera module 20 is an external camera that can be connected through a USB port, a Type C port or the like. The processing module 40 is the processor 92 in the electronic device. The storage module 60 is an external hard disk. The display 80 is an external screen.

In some further examples, some of the camera module 20, the processing module 40, the storage module 60, the output module 70, and the display 80 can be implemented by the components of the portable electronic device 90 itself, and some of them are independent devices independent of the portable electronic device 90.

In some examples, the portable electronic device 90 may be apparatus such as a smartphone, a laptop and a tablet computer.

In some examples, the processing module 40 can be implemented by one or more processors 92. Each processor may be, but is not limited to, a central processing unit, a system on chip (SOC), a general-purpose or special-purpose microprocessor, a digital signal processor (DSP), a programmable logic controller (PLC), an application specific integrated circuit (ASIC), a programmable logic device (PLD), other similar processing devices, or a combination thereof.

In some examples, in addition to being implemented with the screen without a touch function of the above-mentioned portable electronic device 90, the display 80 may be, but is not limited to, a touch screen or a general external display screen (i.e., it has no touch function). The plurality of default images 22 with the continuous capturing time captured by the camera module 20 in advance can be presented in real-time in the display 80. When the display 80 is a touch screen, the input component 30 may be the display 80, or may be an input device additionally provided such as a keyboard, one or more keys, a writing tablet, or any combination thereof.

In some examples, the identifier 442 identifies the strings 146 and 148 by optical character recognition (OCR). In addition, the identifier 442 may be implemented with data marking and supervised learning, a template matching method, and a method of support vector machine (SVM) or decision tree in a machine learning model.

In some examples, the comparison module 48 obtains the final selected image 480 by using a method for comparing image similarities between the second target image 26 and each first target image 220. The method for comparing the image similarities may be mean squared error (MSE), structural similarity index (SSIM), histogram comparison, and feature point comparison and the like. The other parts of the second target image 26 should be the same as one of the plurality of first target images 220 stored, except for the part of second target image 26 that overlaps with the predetermined mark 52 or finger.

In some examples, the barcode image recognition device is used for managing goods in warehouses or logistics. There are one or more barcodes 122 and 124 or strings 146 and 148 on the goods or shelves, where each of the barcodes 122 and 124 or strings 146 and 148 can carry related information about product names, specifications, origins, prices, batch numbers and the like. In some examples, these barcodes 122 and 124 or strings 146 and 148 can be provided (such as pasted or printed) on the goods or shelves. During processing, storage and transportation, the barcodes 122 and 124 are obtained by direct scanning to obtain the information carried or obtain the strings 146 and 148.

In some examples, the barcodes 122 and 124 may have a same barcode type or different barcode types. Specifically, the barcodes 122 and 124 may have a same encoding way (i.e., the same barcode type) or different encoding ways (i.e., different barcode types). In some examples, the barcodes 122 and 124 may be, but is not limited to, any one-dimensional barcode (such as Code 39 barcodes, interleaved 25 barcodes, EAN-13 barcodes, EAN-8 barcodes and Code 128 barcodes) or any two-dimensional barcode (such as QR Code barcodes, PDF 417 barcodes, composite barcodes and Data Matrix barcodes). The one-dimensional barcodes 122 and 124 may represent the string 450 of tens of characters, and the two-dimensional barcode may represent the string 450 of thousands of characters.

In some examples, the strings 146 and 148 are not limited to languages, and the strings 146 and 148 may represent the recognition code of the goods in order to identify a particular commodity. For example, global trade item number (GTIN, including UPC and EAN), international standard book number (ISBN, used for books), or other related recognition codes. The strings 146 and 148 can also represent a manufacturer or supplier code, a batch number, or a serial number, where the manufacturer or supplier code, the batch number, or the serial number can be used for tracking the production batch or serial number of the products.

In summary, in some examples, the barcode image recognition method and device can accurately and controllably output the information carried by the indicated barcodes 122 and 124 or the strings 146 and 148 that can be displayed in the display 80 after being converted when there are a plurality of barcodes 122 and 124 or strings 146 and 148.

## Claims

1. A barcode image recognition method, comprising:
enabling a camera module (20) (S100);
continuously capturing, by the camera module (20), at least one target object (10) in advance after the camera module (20) is enabled to obtain a plurality of default images (22) with continuous capturing time (S110);
identifying, by a first artificial neural network (42), a first target image (220) of each target object (10) in each default image (22) (S120), wherein each target object (10) is a barcode (122, 124) or a string (146, 148), or has a barcode (124) and a string (146);
capturing each first target image (220) from each default image (22) (S130), wherein each default image (22) includes a barcode image (224) of the barcode (122) and/or a string image (226) of the string (146), wherein the barcode image (224) and/or the string image (226) are obtained by the first artificial neural network (42) identifying the default image (22) (S120);
converting each first target image (220) into an obtained string (450, 452) (S130);
storing each first target image (220) and the obtained string (450, 452) corresponding to each first target image (220) (S140);
triggering the camera module (20) according to a confirmation signal to take a single capture of a predetermined mark (52) to obtain a captured image (24) (S150 to S160);
identifying, by a second artificial neural network (46), a marked image (240, 242) of the predetermined mark (52) in the captured image (24) and a second target image (26) of a selected target object (16) of the at least one target object (10) that overlaps with the predetermined mark (52) (S170);
comparing the second target image (26) with each first target image (220) to obtain a final selected image (480), the final selected image (480) being the first target image (220) with the highest similarity to the second target image (26) (S180); and
reading the obtained string (450, 452) corresponding to the final selected image (480) from the stored obtained strings (450, 452) and outputting the read obtained string (450, 452) (S190);
wherein in detail, after the first artificial neural network (42) identifies the first target image (220) in each default image (22) (S120), the first artificial neural network (42) further identifies each first target image (220) as the barcode image (224) and/or the string image (226) (S122);
wherein:
if the first artificial neural network (42) identifies the first target image (220) as the barcode image (224) (S125), decoding, by a decoder (440), the barcode image (224) into the obtained string (450) (S132); and
if the first artificial neural network (42) identifies the first target image (220) as the string image (226) (S127), performing, by an identifier (402), text identification on the string image (226) to obtain the obtained string (452) (S134).

2. The barcode image recognition method according to claim 1, further comprising:
receiving the confirmation signal from an input component (30), wherein the input component (30) is a key (32), the key (32) is located on an indicating device (50) and the indicating device (50) is independent of the camera module (20); and
generating, by the indicating device (50), the predetermined mark (52) on one of the at least one target object (10).

3. The barcode image recognition method according to claim 1, further comprising:
receiving the confirmation signal from an input component (30), wherein the input component (30) is a key (32), the key (32) and the camera module (20) are located on a portable electronic device (90); and
generating, by the portable electronic device (90), the predetermined mark (52) on one of the at least one target object (10), wherein the predetermined mark (52) is a cursor.

4. The barcode image recognition method according to claim 1, further comprising:
identifying the marked image (240, 242) of the predetermined mark (52) in each default image (22) to obtain a marked position of the marked image (240, 242) in each default image (22);
and
generating the confirmation signal according to the capturing time of the default images (22) with the marked image (240, 242) in these default images (22) and the marked position.

5. The barcode image recognition method according to claim 4, further comprising:
pointing to, by an indicating device (50), the selected target object (16) in the at least one target object (10) to form the predetermined mark (52) overlapping with the selected target object (16).

6. The barcode image recognition method according to claim 1, further comprising:
providing that the predetermined mark (52) overlaps with the selected target object (16) in the at least one target object (10).

7. A barcode image recognition device, comprising:
a camera module (20), configured to continuously capture at least one target object (10) in advance to obtain a plurality of default images (22) with continuous capturing time;
an input component (30), coupled to the camera module (20), and configured to generate a confirmation signal to trigger the camera module (20) to take a single capture of a predetermined mark (52) to obtain a captured image (24) where the predetermined mark (52) overlaps with the at least one target object (10);
a processing module (40), coupled to the camera module (20), comprising:
a first artificial neural network (42), identifying a first target image (220) of each target object (10) in each default image (22),
wherein each target object (10) is a barcode (122, 124) or a string (146, 148), or has a barcode (124) and a string (146), and
wherein each default image (22) includes a barcode image (224) of the barcode (122) and/or a string image (226) of the string (146), wherein the barcode image (224) and/or the string image (226) are obtained by the first artificial neural network (42) in the processing module (40) identifying the default image (22);
a conversion module (44), converting each first target image (220) to an obtained string (450, 452);
a second artificial neural network (46), identifying a marked image (240, 242) of the predetermined mark (52) in the captured image (24) and a second target image (26) of a selected target object (16) of the at least one target object (10) that overlaps with the predetermined mark (52); and
a comparison module (48), coupled to the first artificial neural network (42) and the second artificial neural network (46), and comparing the second target image (26) with each first target image (220) to obtain a final selected image (480), the final selected image (480) being the first target image (220) with the highest similarity to the second target image (26);
a storage module (60), coupled to the processing module (40), and storing each first target image (220) and the obtained string (450, 452) corresponding to each first target image (220);
an output module (70), coupled to the comparison module (48) and the storage module (60), and reading the obtained string (450, 452) corresponding to the final selected image (480) from the storage module (60); and
a display (80), coupled to the output module (70), and displaying the obtained string (450, 452) read by the output module (70);
wherein the conversion module (44) includes both a decoder (440) and an identifier (442) and the first artificial neural network (42) is configured to identify a type of the first target image (220), wherein, in detail, after the first artificial neural network (42) identifies the first target image (220) in the default image (22), the first artificial neural network (42) is configured to further identify each first target image (220) as the barcode image (224) and/or the string image (226);
wherein:
if the first artificial neural network (42) identifies the first target image (220) as the barcode image (224), the decoder (440) in the conversion module (44) is configured to decode the barcode image (224) into the obtained string (450), and
if the first artificial neural network (42) identifies the first target image (220) as the string image (226), the identifier (442) in the conversion module (44) is configured to perform text identification on the string image (226) to obtain the obtained string (452).

8. The barcode image recognition device according to claim 7, further comprising an indicating device (50), the input component (30) is a key (32), the key (32) being located on the indicating device (50), and the indicating device (50) being independent of the camera module (20), the indicating device (50) generating the predetermined mark (52) on one of the at least one target object (10).

9. The barcode image recognition device according to claim 7, wherein the input component (30) is a key (32), the key (32) and the camera module (20) are located on a portable electronic device (90), wherein the portable electronic device (90) generates the predetermined mark (52) on one of the at least one target object (10).

10. The barcode image recognition device according to claim 7, wherein the predetermined mark (52) is a finger, a cursor generated by an infrared pen, or a cursor generated by a laser pen.

11. The barcode image recognition device according to claim 7, wherein the processing module (40) further comprises a mark confirmation module (49), configured to identify the marked image (240, 242) of the predetermined mark (52) in each default image (22) to obtain a marked position of the marked image (240, 242) in each default image (22), and generate the confirmation signal according to the capturing time of the plurality of default images (22) with the marked image (240, 242) in these default images (22) and the marked position.

## Patentansprüche

1. Verfahren zur Barcodebilderkennung, aufweisend:
Aktivieren eines Kameramoduls (20) (S100);
kontinuierliches Erfassen, durch das Kameramodul (20), mindestens eines Zielobjekts (10) im Voraus, nachdem das Kameramodul (20) aktiviert wurde, um eine Mehrzahl von kontinuierlich erfassten Ausgangsbildern (22) zu erhalten (S110);
Identifizieren, durch ein erstes künstliches neuronales Netzwerk (42), eines ersten Zielbildes (220) jedes Zielobjekts (10) in jedem Ausgangsbild (22) (S120), wobei jedes Zielobjekt (10) ein Barcode (122, 124) oder eine Zeichenkette (146, 148) ist oder einen Barcode (124) und eine Zeichenkette (146) aufweist;
Extrahieren jedes ersten Zielbildes (220) aus jedem Ausgangsbild (22) (S130), wobei jedes Ausgangsbild (22) ein Barcodebild (224) des Barcodes (122) und/oder ein Zeichenkettenbild (226) der Zeichenkette (146) enthält, wobei das Barcodebild (224) und/oder das Zeichenkettenbild (226) dadurch erhalten werden, dass das erste künstliche neuronale Netzwerk (42) das Ausgangsbild (22) identifiziert (S120);
Umwandeln jedes ersten Zielbildes (220) in eine resultierende Zeichenkette (450, 452) (S130);
Speichern jedes ersten Zielbildes (220) und der jedem ersten Zielbild (220) entsprechenden resultierenden Zeichenkette (450, 452) (S140);
Auslösen des Kameramoduls (20) in Abhängigkeit von einem Bestätigungssignal, um eine einzelne Aufnahme einer vorbestimmten Markierung (52) vorzunehmen, um ein aufgenommenes Bild (24) zu erhalten (S150 bis S160);
Identifizieren, durch ein zweites künstliches neuronales Netzwerk (46), eines markierten Bildes (240, 242) der vorbestimmten Markierung (52) in dem aufgenommenen Bild (24) und eines zweiten Zielbildes (26) eines ausgewählten Zielobjekts (16) des mindestens einen Zielobjekts (10), das sich mit der vorbestimmten Markierung (52) überlappt (S170);
Vergleichen des zweiten Zielbildes (26) mit jedem ersten Zielbild (220), um ein endgültig ausgewähltes Bild (480) zu erhalten, wobei das endgültig ausgewählte Bild (480) das erste Zielbild (220) mit der höchsten Ähnlichkeit zu dem zweiten Zielbild (26) ist (S180); und
Lesen der dem endgültig ausgewählten Bild (480) entsprechenden resultierenden Zeichenkette (450, 452) aus den gespeicherten resultierenden Zeichenketten (450, 452) und Ausgeben der gelesenen resultierenden Zeichenkette (450, 452) (S190);
wobei im Einzelnen, nachdem das erste künstliche neuronale Netzwerk (42) das erste Zielbild (220) in jedem Ausgangsbild (22) identifiziert hat (S120), das erste künstliche neuronale Netzwerk (42) ferner jedes erste Zielbild (220) als das Barcodebild (224) und/oder das Zeichenkettenbild (226) identifiziert (S122);
wobei:
wenn das erste künstliche neuronale Netzwerk (42) das erste Zielbild (220) als das Barcodebild (224) identifiziert (S125), Decodieren, durch einen Decoder (440), des Barcodebildes (224) in die resultierende Zeichenkette (450) (S132); und
wenn das erste künstliche neuronale Netzwerk (42) das erste Zielbild (220) als das Zeichenkettenbild (226) identifiziert (S127), Durchführen, durch einen Identifikator (442), einer Texterkennung an dem Zeichenkettenbild (226), um die resultierende Zeichenkette (452) zu erhalten (S134).

2. Verfahren zur Barcodebilderkennung gemäß Anspruch 1, ferner aufweisend:
Empfangen des Bestätigungssignals von einer Eingabekomponente (30), wobei die Eingabekomponente (30) eine Taste (32) ist, wobei sich die Taste (32) an einer Zeigevorrichtung (50) befindet und die Zeigevorrichtung (50) von dem Kameramodul (20) unabhängig ist; und
Erzeugen der vorbestimmten Markierung (52) auf einem des mindestens einen Zielobjekts (10) durch die Zeigevorrichtung (50).

3. Verfahren zur Barcodebilderkennung gemäß Anspruch 1, ferner aufweisend:
Empfangen des Bestätigungssignals von einer Eingabekomponente (30), wobei die Eingabekomponente (30) eine Taste (32) ist, wobei sich die Taste (32) und das Kameramodul (20) an einer tragbaren elektronischen Vorrichtung (90) befinden; und
Erzeugen der vorbestimmten Markierung (52) auf einem des mindestens einen Zielobjekts (10) durch die tragbare elektronische Vorrichtung (90), wobei die vorbestimmte Markierung (52) ein Cursor ist.

4. Verfahren zur Barcodebilderkennung gemäß Anspruch 1, ferner aufweisend:
Identifizieren des markierten Bildes (240, 242) der vorbestimmten Markierung (52) in jedem Ausgangsbild (22), um eine Position des markierten Bildes (240, 242) in jedem Ausgangsbild (22) zu erhalten; und
Erzeugen des Bestätigungssignals in Abhängigkeit von der Erfassungszeit derjenigen Ausgangsbilder (22), die das markierte Bild (240, 242) enthalten, und von der Position des markierten Bildes.

5. Verfahren zur Barcodebilderkennung gemäß Anspruch 4, ferner aufweisend:
Zeigen, durch eine Zeigevorrichtung (50), auf das ausgewählte Zielobjekt (16) des mindestens einen Zielobjekts (10), um die vorbestimmte Markierung (52) zu bilden, die sich mit dem ausgewählten Zielobjekt (16) überlappt.

6. Verfahren zur Barcodebilderkennung gemäß Anspruch 1, ferner aufweisend:
Überlappen der vorbestimmten Markierung (52) mit dem ausgewählten Zielobjekt (16) des mindestens einen Zielobjekts (10).

7. Vorrichtung zur Barcodebilderkennung, aufweisend:
ein Kameramodul (20), das dazu konfiguriert ist, mindestens ein Zielobjekt (10) im Voraus kontinuierlich zu erfassen, um eine Mehrzahl von kontinuierlich erfassten Ausgangsbildern (22) zu erhalten;
eine Eingabekomponente (30), die mit dem Kameramodul (20) verbunden und dazu konfiguriert ist, ein Bestätigungssignal zu erzeugen, um das Kameramodul (20) auszulösen, sodass eine einzelne Aufnahme einer vorbestimmten Markierung (52) vorgenommen wird, um ein aufgenommenes Bild (24) zu erhalten, wobei sich die vorbestimmte Markierung (52) mit dem mindestens einen Zielobjekt (10) überlappt;
ein Verarbeitungsmodul (40), das mit dem Kameramodul (20) verbunden ist, aufweisend:
ein erstes künstliches neuronales Netzwerk (42), das ein erstes Zielbild (220) jedes Zielobjekts (10) in jedem Ausgangsbild (22) identifiziert,
wobei jedes Zielobjekt (10) ein Barcode (122, 124) oder eine Zeichenkette (146, 148) ist oder einen Barcode (124) und eine Zeichenkette (146) aufweist, und
wobei jedes Ausgangsbild (22) ein Barcodebild (224) des Barcodes (122) und/oder ein Zeichenkettenbild (226) der Zeichenkette (146) enthält, wobei das Barcodebild (224) und/oder das Zeichenkettenbild (226) durch Identifizieren des Ausgangsbildes (22) durch das erste künstliche neuronale Netzwerk (42) in dem Verarbeitungsmodul (40) erhalten werden;
ein Umwandlungsmodul (44), das jedes erste Zielbild (220) in eine resultierende Zeichenkette (450, 452) umwandelt;
ein zweites künstliches neuronales Netzwerk (46), das ein markiertes Bild (240, 242) der vorbestimmten Markierung (52) in dem aufgenommenen Bild (24) und ein zweites Zielbild (26) eines ausgewählten Zielobjekts (16) des mindestens einen Zielobjekts (10), das sich mit der vorbestimmten Markierung (52) überlappt, identifiziert; und
ein Vergleichsmodul (48), das mit dem ersten künstlichen neuronalen Netzwerk (42) und dem zweiten künstlichen neuronalen Netzwerk (46) verbunden ist, wobei das zweite Zielbild (26) mit jedem ersten Zielbild (220) verglichen wird, um ein endgültig ausgewähltes Bild (480) zu erhalten, wobei das endgültig ausgewählte Bild (480) das erste Zielbild (220) mit der höchsten Ähnlichkeit zu dem zweiten Zielbild (26) ist;
ein Speichermodul (60), das mit dem Verarbeitungsmodul (40) verbunden ist und jedes erste Zielbild (220) und die jedem ersten Zielbild (220) entsprechende resultierende Zeichenkette (450, 452) speichert;
ein Ausgabemodul (70), das mit dem Vergleichsmodul (48) und dem Speichermodul (60) verbunden ist, wobei die dem endgültig ausgewählten Bild (480) entsprechende resultierende Zeichenkette (450, 452) aus dem Speichermodul (60) gelesen wird; und
eine Anzeigevorrichtung (80), die mit dem Ausgabemodul (70) verbunden ist und die durch das Ausgabemodul (70) gelesene resultierende Zeichenkette (450, 452) anzeigt;
wobei das Umwandlungsmodul (44) sowohl einen Decoder (440) als auch einen Identifikator (442) aufweist und das erste künstliche neuronale Netzwerk (42) dazu konfiguriert ist, einen Typ des ersten Zielbildes (220) zu identifizieren, wobei im Einzelnen, nachdem das erste künstliche neuronale Netzwerk (42) das erste Zielbild (220) in dem Ausgangsbild (22) identifiziert hat, das erste künstliche neuronale Netzwerk (42) dazu konfiguriert ist, ferner jedes erste Zielbild (220) als das Barcodebild (224) und/oder das Zeichenkettenbild (226) zu identifizieren;
wobei:
wenn das erste künstliche neuronale Netzwerk (42) das erste Zielbild (220) als das Barcodebild (224) identifiziert, der Decoder (440) in dem Umwandlungsmodul (44) dazu konfiguriert ist, das Barcodebild (224) in die resultierende Zeichenkette (450) zu decodieren; und
wenn das erste künstliche neuronale Netzwerk (42) das erste Zielbild (220) als das Zeichenkettenbild (226) identifiziert, der Identifikator (442) in dem Umwandlungsmodul (44) dazu konfiguriert ist, eine Texterkennung an dem Zeichenkettenbild (226) durchzuführen, um die resultierende Zeichenkette (452) zu erhalten.

8. Vorrichtung zur Barcodebilderkennung gemäß Anspruch 7, ferner aufweisend eine Zeigevorrichtung (50), wobei die Eingabekomponente (30) eine Taste (32) ist, wobei sich die Taste (32) an der Zeigevorrichtung (50) befindet und die Zeigevorrichtung (50) von dem Kameramodul (20) unabhängig ist, wobei die Zeigevorrichtung (50) die vorbestimmte Markierung (52) auf einem des mindestens einen Zielobjekts (10) erzeugt.

9. Vorrichtung zur Barcodebilderkennung gemäß Anspruch 7, wobei die Eingabekomponente (30) eine Taste (32) ist, wobei sich die Taste (32) und das Kameramodul (20) an einer tragbaren elektronischen Vorrichtung (90) befinden, wobei die tragbare elektronische Vorrichtung (90) die vorbestimmte Markierung (52) auf einem des mindestens einen Zielobjekts (10) erzeugt.

10. Vorrichtung zur Barcodebilderkennung gemäß Anspruch 7, wobei die vorbestimmte Markierung (52) ein Finger, ein durch einen Infrarotstift erzeugter Cursor oder ein durch einen Laserstift erzeugter Cursor ist.

11. Vorrichtung zur Barcodebilderkennung gemäß Anspruch 7, wobei das Verarbeitungsmodul (40) ferner ein Markierungsbestätigungsmodul (49) aufweist, das dazu konfiguriert ist, das markierte Bild (240, 242) der vorbestimmten Markierung (52) in jedem Ausgangsbild (22) zu identifizieren, um eine Position des markierten Bildes (240, 242) in jedem Ausgangsbild (22) zu erhalten, und dazu konfiguriert ist, das Bestätigungssignal in Abhängigkeit von der Erfassungszeit derjenigen Ausgangsbilder (22), die das markierte Bild (240, 242) enthalten, und von der Position des markierten Bildes zu erzeugen.

## Revendications

1. Procédé de reconnaissance d'images de codes-barres, comprenant :
l'activation d'un module de caméra (20) (S100) ;
la capture continue, par le module de caméra (20), d'au moins un objet cible (10) à l'avance après l'activation du module de caméra (20), afin d'obtenir une pluralité d'images par défaut (22) capturées en continu (S110) ;
l'identification, par un premier réseau neuronal artificiel (42), d'une première image cible (220) de chaque objet cible (10) dans chaque image par défaut (22) (S120), chaque objet cible (10) étant un code-barres (122, 124) ou une chaîne de caractères (146, 148), ou comportant un code-barres (124) et une chaîne de caractères (146) ;
l'extraction de chaque première image cible (220) à partir de chaque image par défaut (22) (S130), chaque image par défaut (22) comprenant une image de code-barres (224) du code-barres (122) et/ou une image de chaîne de caractères (226) de la chaîne de caractères (146), l'image de code-barres (224) et/ou l'image de chaîne de caractères (226) étant obtenues par identification de l'image par défaut (22) par le premier réseau neuronal artificiel (42) (S120) ;
la conversion de chaque première image cible (220) en une chaîne de caractères résultante (450, 452) (S130) ;
l'enregistrement de chaque première image cible (220) et de la chaîne de caractères résultante (450, 452) correspondant à chaque première image cible (220) (S140) ;
le déclenchement du module de caméra (20), en fonction d'un signal de confirmation, pour effectuer une capture unique d'un repère prédéterminé (52) afin d'obtenir une image capturée (24) (S150 à S160) ;
l'identification, par un deuxième réseau neuronal artificiel (46), d'une image du repère (240, 242) correspondant au repère prédéterminé (52) dans l'image capturée (24), et d'une deuxième image cible (26) d'un objet cible sélectionné (16) parmi l'au moins un objet cible (10), qui se superpose au repère prédéterminé (52) (S170) ;
la comparaison de la deuxième image cible (26) avec chaque première image cible (220) afin d'obtenir une image sélectionnée finale (480), l'image sélectionnée finale (480) étant la première image cible (220) présentant la similarité la plus élevée avec la deuxième image cible (26) (S180) ; et
la lecture, parmi les chaînes de caractères résultantes (450, 452) enregistrées, de la chaîne de caractères résultante (450, 452) correspondant à l'image sélectionnée finale (480), et la sortie de la chaîne de caractères résultante (450, 452) ainsi lue (S190) ;
dans lequel, en détail, après que le premier réseau neuronal artificiel (42) a identifié la première image cible (220) dans chaque image par défaut (22) (S120), le premier réseau neuronal artificiel (42) identifie en outre chaque première image cible (220) comme étant l'image de code-barres (224) et/ou l'image de chaîne de caractères (226) (S122) ;
dans lequel :
si le premier réseau neuronal artificiel (42) identifie la première image cible (220) comme étant l'image de code-barres (224) (S125), procéder au décodage, par un décodeur (440), de l'image de code-barres (224) en la chaîne de caractères résultante (450) (S132) ; et
si le premier réseau neuronal artificiel (42) identifie la première image cible (220) comme étant l'image de chaîne de caractères (226) (S127), effectuer, par un identificateur (442), une reconnaissance de texte sur l'image de chaîne de caractères (226) afin d'obtenir la chaîne de caractères résultante (452) (S134).

2. Procédé de reconnaissance d'images de codes-barres selon la revendication 1, comprenant en outre :
la réception du signal de confirmation en provenance d'un composant d'entrée (30), dans lequel le composant d'entrée (30) est une touche (32), la touche (32) étant située sur un dispositif de pointage (50) et le dispositif de pointage (50) étant indépendant du module de caméra (20) ; et
la génération, par le dispositif de pointage (50), du repère prédéterminé (52) sur l'un de l'au moins un objet cible (10).

3. Procédé de reconnaissance d'images de codes-barres selon la revendication 1, comprenant en outre :
la réception du signal de confirmation en provenance d'un composant d'entrée (30), dans lequel le composant d'entrée (30) est une touche (32), la touche (32) et le module de caméra (20) étant situés sur un dispositif électronique portable (90) ; et
la génération, par le dispositif électronique portable (90), du repère prédéterminé (52) sur l'un de l'au moins un objet cible (10), dans lequel le repère prédéterminé (52) est un curseur.

4. Procédé de reconnaissance d'images de codes-barres selon la revendication 1, comprenant en outre :
l'identification de l'image du repère (240, 242) correspondant au repère prédéterminé (52) dans chaque image par défaut (22), afin d'obtenir une position de l'image du repère (240, 242) dans chaque image par défaut (22); et
la génération du signal de confirmation en fonction du temps de capture des images par défaut (22) comportant l'image du repère (240, 242) dans ces images par défaut (22), et de ladite position de l'image du repère.

5. Procédé de reconnaissance d'images de codes-barres selon la revendication 4, comprenant en outre :
le pointage, par un dispositif de pointage (50), de l'objet cible sélectionné (16) parmi l'au moins un objet cible (10), afin de former le repère prédéterminé (52) se superposant à l'objet cible sélectionné (16).

6. Procédé de reconnaissance d'images de codes-barres selon la revendication 1, comprenant en outre :
le fait que le repère prédéterminé (52) se superpose à l'objet cible sélectionné (16) parmi l'au moins un objet cible (10).

7. Dispositif de reconnaissance d'images de codes-barres, comprenant :
un module de caméra (20), configuré pour capturer en continu à l'avance au moins un objet cible (10) afin d'obtenir une pluralité d'images par défaut (22) capturées en continu ;
un composant d'entrée (30), relié au module de caméra (20) et configuré pour générer un signal de confirmation afin de déclencher le module de caméra (20) pour effectuer une capture unique d'un repère prédéterminé (52) afin d'obtenir une image capturée (24), dans laquelle le repère prédéterminé (52) se superpose à l'au moins un objet cible (10) ;
un module de traitement (40), relié au module de caméra (20), comprenant :
un premier réseau neuronal artificiel (42), identifiant une première image cible (220) de chaque objet cible (10) dans chaque image par défaut (22),
dans lequel chaque objet cible (10) est un code-barres (122, 124) ou une chaîne de caractères (146, 148), ou comporte un code-barres (124) et une chaîne de caractères (146), et
dans lequel chaque image par défaut (22) comprend une image de code-barres (224) du code-barres (122) et/ou une image de chaîne de caractères (226) de la chaîne de caractères (146), l'image de code-barres (224) et/ou l'image de chaîne de caractères (226) étant obtenues par identification de l'image par défaut (22) par le premier réseau neuronal artificiel (42) dans le module de traitement (40) ;
un module de conversion (44), convertissant chaque première image cible (220) en une chaîne de caractères résultante (450, 452) ;
un deuxième réseau neuronal artificiel (46), identifiant une image du repère (240, 242) correspondant au repère prédéterminé (52) dans l'image capturée (24) et une deuxième image cible (26) d'un objet cible sélectionné (16) parmi l'au moins un objet cible (10), qui se superpose au repère prédéterminé (52) ; et
un module de comparaison (48), relié au premier réseau neuronal artificiel (42) et au deuxième réseau neuronal artificiel (46), dans lequel la deuxième image cible (26) est comparée à chaque première image cible (220) afin d'obtenir une image sélectionnée finale (480), l'image sélectionnée finale (480) étant la première image cible (220) présentant la similarité la plus élevée avec la deuxième image cible (26) ;
un module d'enregistrement (60), relié au module de traitement (40), et enregistrant chaque première image cible (220) et la chaîne de caractères résultante (450, 452) correspondant à chaque première image cible (220) ;
un module de sortie (70), relié au module de comparaison (48) et au module d'enregistrement (60), dans lequel la chaîne de caractères résultante (450, 452) correspondant à l'image sélectionnée finale (480) est lue à partir du module d'enregistrement (60) ; et
un dispositif d'affichage (80), relié au module de sortie (70), et affichant la chaîne de caractères résultante (450, 452) lue par le module de sortie (70) ;
dans lequel le module de conversion (44) comprend à la fois un décodeur (440) et un identificateur (442), et le premier réseau neuronal artificiel (42) est configuré pour identifier un type de la première image cible (220), dans lequel, en détail, après que le premier réseau neuronal artificiel (42) a identifié la première image cible (220) dans l'image par défaut (22), le premier réseau neuronal artificiel (42) est configuré pour identifier en outre chaque première image cible (220) comme étant l'image de code-barres (224) et/ou l'image de chaîne de caractères (226) ;
dans lequel :
si le premier réseau neuronal artificiel (42) identifie la première image cible (220) comme étant l'image de code-barres (224), le décodeur (440) dans le module de conversion (44) est configuré pour décoder l'image de code-barres (224) en la chaîne de caractères résultante (450), et
si le premier réseau neuronal artificiel (42) identifie la première image cible (220) comme étant l'image de chaîne de caractères (226), l'identificateur (442) dans le module de conversion (44) est configuré pour effectuer une reconnaissance de texte sur l'image de chaîne de caractères (226) afin d'obtenir la chaîne de caractères résultante (452).

8. Dispositif de reconnaissance d'images de codes-barres selon la revendication 7, comprenant en outre un dispositif de pointage (50), le composant d'entrée (30) étant une touche (32), la touche (32) étant située sur le dispositif de pointage (50), et le dispositif de pointage (50) étant indépendant du module de caméra (20), le dispositif de pointage (50) générant le repère prédéterminé (52) sur l'un de l'au moins un objet cible (10).

9. Dispositif de reconnaissance d'images de codes-barres selon la revendication 7, dans lequel le composant d'entrée (30) est une touche (32), la touche (32) et le module de caméra (20) étant situés sur un dispositif électronique portable (90), dans lequel le dispositif électronique portable (90) génère le repère prédéterminé (52) sur l'un de l'au moins un objet cible (10).

10. Dispositif de reconnaissance d'images de codes-barres selon la revendication 7, dans lequel le repère prédéterminé (52) est un doigt, un curseur généré par un stylo infrarouge ou un curseur généré par un stylo laser.

11. Dispositif de reconnaissance d'images de codes-barres selon la revendication 7, dans lequel le module de traitement (40) comprend en outre un module de confirmation de repère (49), configuré pour identifier l'image du repère (240, 242) correspondant au repère prédéterminé (52) dans chaque image par défaut (22), afin d'obtenir une position de l'image du repère (240, 242) dans chaque image par défaut (22), et pour générer le signal de confirmation en fonction du temps de capture de la pluralité d'images par défaut (22) comportant l'image du repère (240, 242) dans ces images par défaut (22) et de ladite position de l'image du repère.
